# EUROPEAN PATENT SPECIFICATION

(11) **EP 1 905 641 B1**
(45) Date of publication and mention of the grant of the patent: **18.08.2010**
(21) Application number: 06425661.3
(22) Date of filing: 27.09.2006
(51) Int. Cl.: B60N 2/30

(54) **Configurable vehicle seat**
Konfigurierbarer Fahrzeugsitz
Siège de véhicule configurable

(43) Date of publication of application: 02.04.2008
(73) Proprietor: C.R.F. Società Consortile per Azioni, 10043 - Orbassano (Torino) (IT)
(72) Inventor: Demontis, Salvatore, 10043 Orbassano (IT); Masoero, Giorgio, 10043 Orbassano (IT)
(74) Representative: Cerbaro, Elena

(56) References cited:
- EP-A- 1 396 379
- EP-A- 1 604 862
- DE-B3- 10 237 612
- DE-B3-102004 024 225
- JP-A- 6 219 198

## Description

The present invention relates to a configurable vehicle seat, in particular to a rear seat forming part, in a passenger compartment, of the last row of seats.

As is known, users of vehicles have the conflicting requirements, according to the situations, of carrying the largest number of passengers and of having available a relatively capacious boot. It is hence necessary to exploit at best the space available in the rear area of the vehicle and to give the possibility to the user of configuring the vehicle itself according to the specific needs.

Rear seats are known which comprise a fixed seat portion and a backrest that can be knocked down, which is hinged about a fixed axis and can be rotated forwards and downwards so as to be set resting against the seat portion. In this way, the rear surface of the backrest comes to define a substantially horizontal resting surface, which, in some known vehicles, extends as prolongation of the loading surface of the boot.

In order to limit the height of the resting surface defined by the rear surface of the backrest when the backrest is knocked down, solutions are known in which the front end of the seat portion is hinged to a fixed structure to enable tilting forwards and upwards of the seat portion through approximately 90°, in a substantially vertical position resting against a front seat, to enable then the backrest to be knocked down on the underlying fixed structure.

The need is felt to have, in the knocked-down configuration of the seat, a relatively wide and low resting surface and relatively contained overall dimensions. In particular, the need is felt of varying the configuration of the seat in a fast way and of having a simple seat but one with a relatively stable resting surface.

EP 1604862 A discloses a seat according to the preamble of claim 1. Such seat has a support defined by rigid arms defining an articulated quadrilateral. A backrest is mounted on the end of one of the arms by means of a lockable articulation.

DE 10 2004 024225 B discloses a motor vehicle seat having a backrest and a device for folding forward the backrest.

According to EP 1396379 A, a tilting seat for a motor vehicle has a squab movably mounted with respect to the vehicle floor between a lowered position against the floor and a raised use position. The squab is mounted to the floor by means of a linkage with stops. The stops hold the squad in the use position in which it is raised and can be defined by corresponding formation on the vehicle structure and the squab.

DE 10237612 B discloses a seat in which the seat portion and the backrest are linked together. The seat can be rotated forwards and upside-down by rotating the backrest in a loading configuration, in which the backrest is located in front of the seat portion.

According to JP 06 219198 A, a seat can be housed in a recessed space made on the floor of a car body. The backrest and the seat cushion of the seat are supported by respective lever arms. The seat cushion can be turned upside-down about its connecting points with the lever arms during the movement from and into the recessed space.

The aim of the present invention is to provide a configurable vehicle seat which will enable the requirements set forth above to be met in a simple and inexpensive way.

According to the present invention, a configurable vehicle seat is provided, as defined in claim 1.

For a better understanding of the present invention a preferred embodiment is now described, purely by way of nonlimiting example, with reference to the attached plate of drawings, wherein:
- Figure 1 is a schematic side view with parts in cross section of a preferred embodiment of the configurable vehicle seat according to the present invention;
- Figure 2 shows at an enlarged scale the seat of Figure 1;
- Figure 3 is a perspective view with parts removed for clarity of the seat of Figure 1; and
- Figure 4 is a schematic side view that shows the seat in an intermediate position when it is being configured.

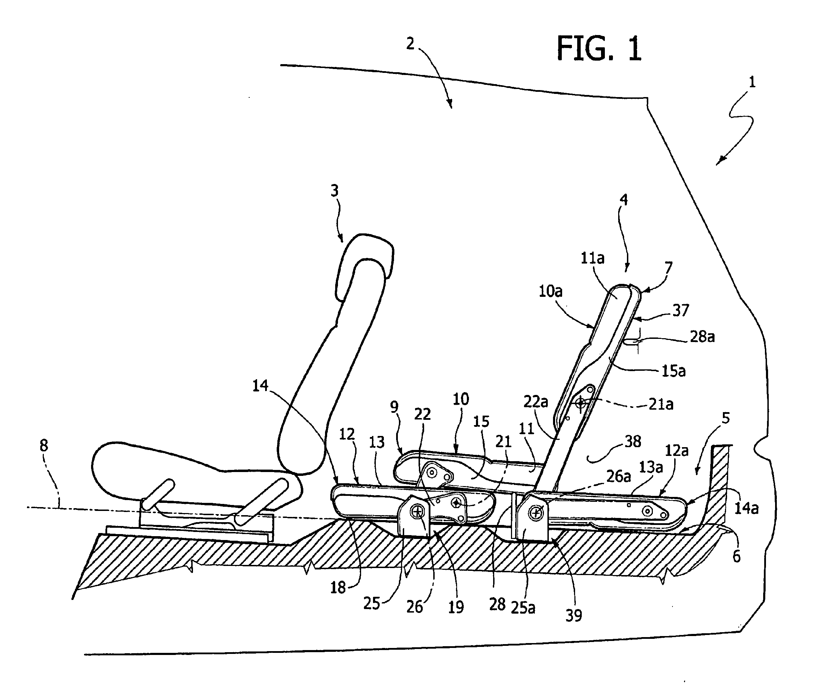

In Figure 1, the reference number 1 designates, as a whole, a vehicle (partially and schematically illustrated) comprising a passenger compartment 2, which houses three rows of seats, only the last two of which are illustrated and are designated by the reference numbers 3 and 4.

The row 4 is adjacent to a rear boot 5 defined, at the bottom, by a loading surface 6 and is formed by two seats 7, which are set alongside one another transverse to a longitudinal direction 8 of advance of the vehicle 1. The seats 7 are the same as one another, so that the ensuing description will make reference only to one of the two.

With reference to the attached figures, the seat 7 comprises a seat portion 9 having a soft surface 10 defined by a cushion body 11, which is a resting surface for at least one passenger, and a rear surface 12, which is opposite to the soft surface 10 and is defined by a portion 13 that is substantially rigid forming part of an end wall 14 that supports, in a fixed position, the cushion body 11.

The end wall 14 comprises two sides 15, which are fixed with respect to the portion 13, are preferably made of a single piece with the portion 13 of a rigid plastic material, and are arranged on opposite sides of the cushion body 11. The end wall 14 is coupled to a fixed structure of the vehicle 1, in particular to the floor 18 that defines at the bottom the passenger compartment 2, via a connection assembly 19. The assembly 19 enables rotation of the seat portion 9 through approximately 180° between a sitting configuration, in which the soft surface 10 faces upwards, and a loading configuration or knocked-down configuration, in which the rear surface 12 faces upwards.

The seat portion 9 is able to rotate about an axis 21, which is movable to enable rotation of the seat portion 9 in a convenient way in the space available and, in particular, to render, in the loading configuration, the rear surface 12 lower than the height assumed by the soft surface 10 in the sitting configuration. In particular, the assembly 19 comprises two levers 22, which are set on opposite sides of the seat portion 9 and comprise respective portions 23 hinged to the sides 15, and respective portions 24 hinged to respective brackets 25 about a fixed axis 26 parallel to the axis 21. The brackets 25 are fixed to the floor 18 in a conventional way (not illustrated).

The assembly 19 comprises at least one support 28 set in a fixed position and longitudinally at a distance from the brackets 25 and, hence, the levers 22 in the direction 8 so as to perform a supporting function for the portion 13 when the seat portion 9 is in its sitting configuration. In particular, two supports 28 are envisaged, which are carried by the floor 18 in positions transversely set at a distance from one another and each behind a corresponding bracket 25.

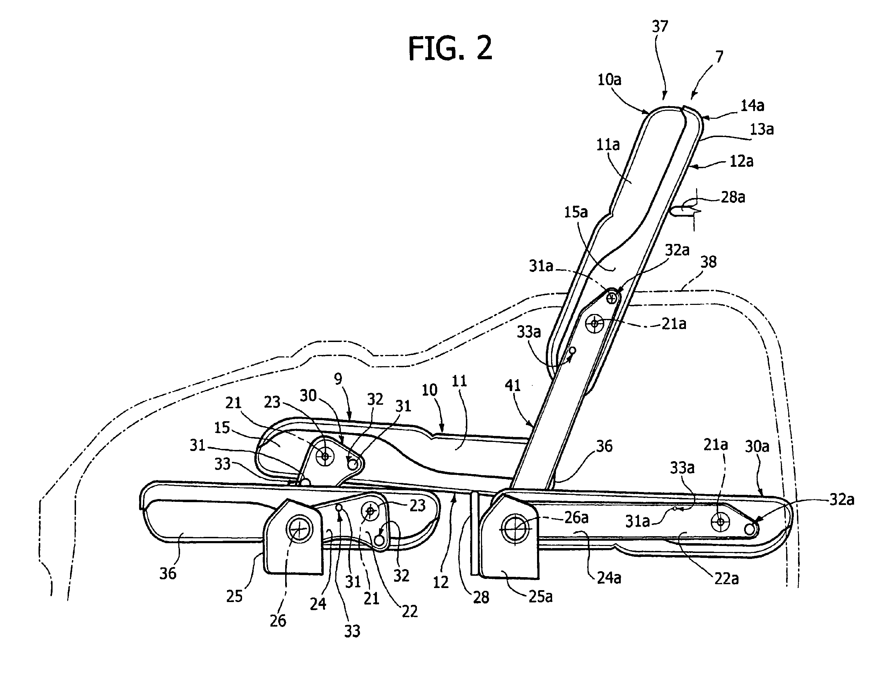

With reference to Figure 2, a releasable locking device 30 is provided for angularly locking the seat portion 9 to said levers 22 about the axis 21. In particular, the device 30 is carried by the sides 15 and locks the seat portion 9 in both the sitting configuration and the loading configuration. The device 30 comprises two pins 31, which are coaxial and opposed to one another and each of which selectively engages a corresponding pair of seats 32, 33. The seats 32, 33 are provided on both of the levers 22 and are set at an angular distance apart about the axis 21.

The pins 31 can be retracted with respect to the sides 15 within respective seats (not illustrated) against the elastic action of respective springs (not illustrated either) for disengaging the seats 32, 33 and freeing rotation of the seat portion 9 about the axis 21. When the seat 1 is in the sitting configuration, the pins 31 engage the seats 32.

The levers 22 rotate about the axis 26 between a raised position, corresponding to the sitting configuration, and a lowered position, corresponding to the loading configuration. In particular, the levers 22 rotate in an opposite direction with respect to the direction of rotation which is to provide the seat portion 9 about the axis 21 during the displacements between the sitting configuration and the loading configuration.

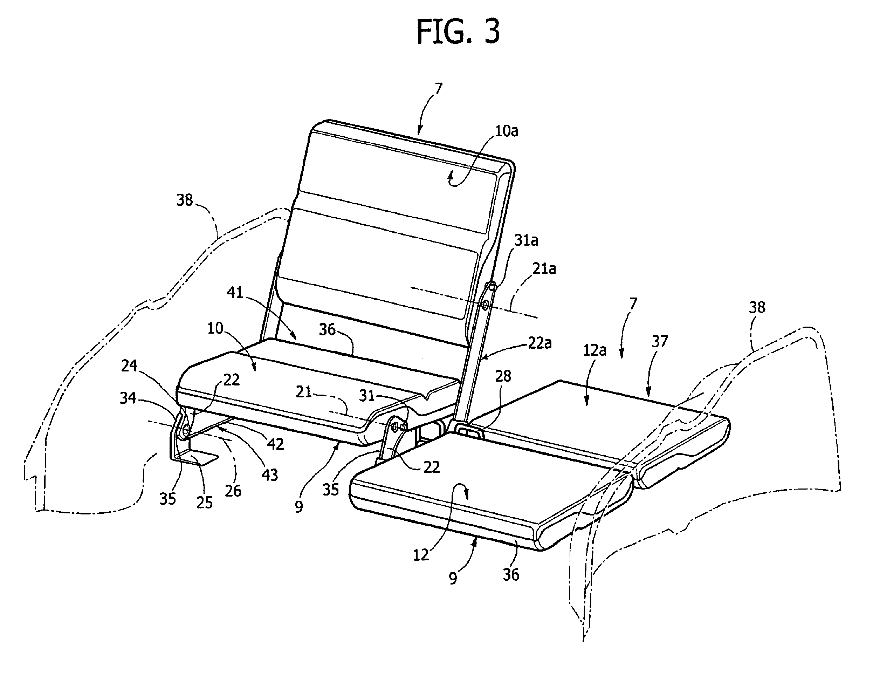

With reference to Figure 3, the brackets 25 comprise respective tabs 34, which project towards the sides 15 and define an end-of-travel contrast surface for the front edges 35 of the levers 22 so as to stop rotation forwards when the levers 22 are set in a raised position.

When the seat portion 9 is in the loading configuration, it is aligned with the supports 28 in the direction 8. At the same time, the surface 10 is in contact with the floor 18, whilst the pins 31 engage the seats 33.

Once again with reference to Figure 2, one end 36 of the seat portion 9 is set backwards and so that it rests against the supports 28 when it is in the sitting configuration, and is set forwards when it is in the loading configuration. In the loading configuration, resting or forcing of the end 36 against the floor 18 and engagement of the pins 31 in the seats 33 prevent the levers 22 from rotating forwards and upwards about the axis 26 so that the entire seat portion 9 remains stationary, even in the event of possible impact.

With reference to the attached figures, the seat 7 also comprises a backrest 37 coupled to the floor 18 and to the sides 38 of the vehicle via a connection assembly 39.

The backrest 37 and the assembly 39 are similar to the seat portion 9 and to the assembly 19 so that the components of the backrest 37 and of the assembly 39 are designated by the same reference numbers used for the seat portion 9 and the assembly 19 followed by the reference letter "a".

The assembly 39 differs from the assembly 19 in that: the levers 22a are defined by elongated rectilinear arms, which are aligned to the backrest 37 both in the sitting configuration and in the loading configuration, and which, in the sitting configuration, define between them a space 41 that houses the end 36 (Figure 3); and the support 28a is carried by the sides 38, instead of by the floor 18, and supports the backrest 37 in a substantially vertical position.

Preferably, the seat portion 9 and the backrest 37 are bodies identical to one another defined by modules the sides of which can be hinged, in the same point, indifferently to the levers 22 or else to the arms 22a.

In the loading configuration, the backrest 37 has the cushion body 11a set resting against the loading surface 6, whilst the supports 28 are set between the backrest 37 and the seat portion 9. In addition, the rear surfaces 12, 12a are substantially coplanar to one another.

The levers 22a and 22 are connected to one another by two connecting rods 42 (only one of which is partially illustrated in Figure 3), which render the motions of rotation of the levers 22, 22a about the axes 26, 26a dependent upon one another. In particular, the ends of the connecting rods 42 are hinged to the portions 24, 24a in eccentric positions with respect to the axes 26, 26a. In this way, the set of the levers 22, 22a and of the connecting rods 42 defines an articulated quadrilateral 43, which is rotated backwards for displacing the seat into the loading configuration after the pins 31, 31a have been released from the respective seats 32, 32a.

In particular, in order to displace the seat 7 from the sitting configuration to the loading configuration, first the pins 31 are released from the seats 32. Next, the seat portion 9 is made to rotate about the axis 21 forwards, first upwards, by raising the end 36 from the supports 28, and then downwards until the end 36 is made to rest against the floor 18. At this point, the levers 22 remain in the raised position in so far as they are connected via the connecting rods 42 to the levers 22a that are still fixed.

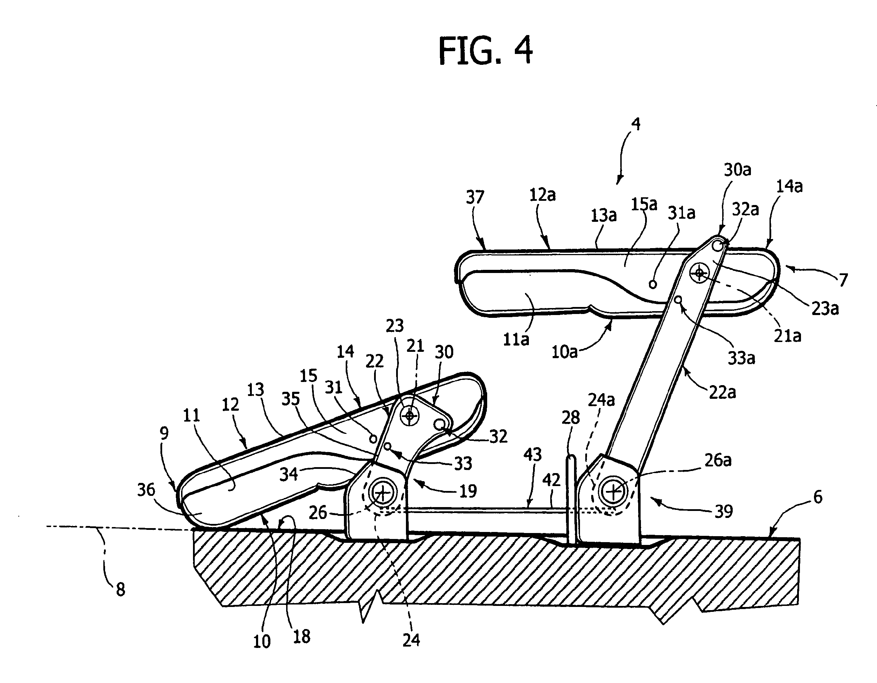

Next, the pins 31a are released from the seats 32a. Then, the backrest 37 is moved away from the support 28a and made to rotate forwards and downwards about the axis 21a, until an intermediate position is reached in which it is substantially horizontal, whilst the levers 22a are still in the raised position (Figure 4). A system of springs (not illustrated) keeps the levers 22a and the backrest 37 in equilibrium in said intermediate position, until a user starts to push the backrest 37 downwards by acting manually on the portion 13a. Said system comprises springs set in a position corresponding to the pins for hinging the levers 22, 22a to the brackets 25, 25a, to the seat portion 9, and to the backrest 37.

If the backrest 37 is kept always in a substantially horizontal position, said thrust causes rotation of the backrest 37 further forwards with respect to the levers 22a about the axis 21a and, at the same time, causes rotation of the levers 22a backwards and downwards about the axis 26a.

The levers 22a draw the levers 22 about the axis 26 in rotation backwards and downwards by means of the connecting rods 42. Rotation continues until the cushion body 11a comes to rest against the loading surface 6, the pins 31 come to engage in the seats 33, and the pins 31a come to engage in the seats 33a.

Resting of the cushion body 11a against the loading surface 6 and, above all, coupling via the connecting rods 42 of the levers 22a to the levers 22, which are fixed in the loading configuration, prevents the levers 22a and, hence, the backrest 37 from rotating forwards and upwards about the axis 26a, even in the event of possible impact.

Between the sitting configuration and the loading configuration, consequently, the angle of relative rotation of the backrest 37 about the axis 21a with respect to the arms 22a and the angle of rotation of the seat portion 9 with respect to the floor 18 are 180°.

The modality for bringing the seat 7 back into the sitting configuration entails operations having a reverse sequence with respect to the one just described, so that it is not described in detail.

From the foregoing description, it is evident how the seat 7 enables a large resting surface to be made available when it is set in the loading configuration in so far as it uses also the seat portion 9 as resting surface, and how the space occupied by the seat portion 9 itself is relatively small thanks to the particular system of coupling and rotation of the levers 22.

The overall dimensions are also contained thanks to the alignment of the seat portion 9 and of the backrest 37 with the supports 28 in the loading configuration.

The assemblies 19 and 39 are then extremely simple, render the change of configuration extremely fast, and enable the seat 7 to remain compact in the loading configuration.

In addition, the seat 7 is relatively inexpensive in so far as it exploits components, i.e., the seat portion 9 and the backrest 37, which are modular or interchangeable.

Finally, it is clear that modifications and variations may be made to the seat 7 described and illustrated herein, as long they remain within the scope of protection of the present invention, as defined in the annexed claims.

The levers 22, 22a and/or the brackets 25, 25a could be directly connected to the sides 38 instead of to the floor 18.

A releasable retention device could be provided, for example, of the snap-action type, for withholding the portions 13, 13a so that they are coupled to the supports 28,28a.

Furthermore, the levers 22,22a could be replaced with other lever mechanisms that enable rotations equivalent to the ones described and claimed above for configuring the seat portion 9 and/or the backrest 37.

In addition, the brackets 25,25a could be replaced by a supporting base coupled to the floor 18 in an adjustable way.

## Claims

1. A configurable seat (7) for a vehicle (1); the seat comprising:
- a seat portion (9) and a backrest (37) having:
a) respective soft surfaces (10, 10a) defining a resting surface for at least one passenger; and
b) respective rear surfaces (12, 12a) opposite to the corresponding soft surfaces (10, 10a);
- first (19) and second (39) coupling means for coupling said seat portion (9) and, respectively, said backrest (37) to a structure (18) of the vehicle;
said first coupling means (19) comprising first levers (22) so as to rotate said seat portion (9) through approximately 180° with respect to said structure (18) between:
- a sitting configuration, in which the soft surface (10) of said seat portion (9) faces upwards, and
- a loading configuration, in which the rear surface (12) of said seat portion (9) faces upwards and is lower than the height assumed by the soft surface (10) of said seat portion (9) in the sitting configuration;
said first levers (22) comprising:
- a first portion (23) hinged to said seat portion (9) about a first horizontal axis (21), orthogonal to a longitudinal direction (8) of advance of said vehicle, and
- a second portion (24) that is able to rotate with respect to said structure (18) about a second horizontal axis (26) parallel to said first horizontal axis (21);
during displacement between said loading configuration and said sitting configuration, said first levers (22) being rotated about said second horizontal axis (26) between two end-of-travel angular positions in an opposite direction with respect to the direction of rotation of said seat portion (9) about said first horizontal axis (21);
said second coupling means (39) comprising second levers (22a) so as to rotate said backrest (37) between a sitting configuration and a loading configuration; said second levers (22a) comprising:
- a third portion (23a) hinged to said backrest (37) about a third horizontal axis (21a), parallel to said first horizontal axis (21), and
- a fourth portion (24a) for hinging said second levers to said structure (18) about a fourth horizontal axis (26a) parallel to said first horizontal axis (21);
said backrest (37) being rotatable about said third horizontal axis (21a) from said sitting configuration to an intermediate position in which said backrest (37) is substantially horizontal with its rear surface (12a) facing upwards, whilst said second levers (22a) are still fixed about said fourth horizontal axis (26a);
said first (22) and second (22a) levers forming part of an articulated quadrilateral (43) that renders the rotation of said seat portion (9) about said second horizontal axis (26) dependent upon knocking-down of said backrest (37) from said intermediate position to said loading configuration; **characterised by** comprising a system of springs that keeps said second levers (22a) and said backrest (37) in equilibrium in said intermediate position, until a user starts to push said backrest (37) downwards by acting manually on its rear surface (12a).

2. The seat according to claim 1, **characterised in that** said system of springs comprises springs located in positions corresponding to pins provided for hinging said first (22) and second (22a) levers.

3. The seat according to claim 1 or 2, **characterised in that** said second portion (24) is hinged about said second horizontal axis (26) to a bracket (25), that can be fixed to said structure (18); said bracket comprising a tab (34), which projects towards a side (15) of said seat portion (9) and defines an end-of-travel contrast surface for a front edge (35) of said first levers (22) so as to stop rotation forwards about said second horizontal axis when said first levers (22) are located in a raised position with respect to said bracket (25).

4. The seat according to anyone of the preceding claims, **characterized by** comprising releasable locking means (30) for angularly locking said seat portion (9) to said first levers (22) about said first horizontal axis (21) at least in said sitting configuration.

5. The seat according to anyone of the preceding claims, **characterized in that**, for each of said backrest (37) and seat portion (9), the rear surface (12, 12a) is defined by a portion of wall (13, 13a) that is substantially rigid and defines part of an end wall (14, 14a), which carries a cushion body (11, 11a) and comprises two sides (15, 15a) located on opposite sides of said cushion body (11, 11a).

6. The seat according to Claim 5, **characterized in that** said first levers (22) are defined by two levers (22), which are located on opposite sides of said seat portion (9) and the respective first portions (23) each hinged to a corresponding said side (15) of the end wall (14).

7. The seat according to claim 5 or 6, **characterized in that** the portions of wall (13, 13a) of said seat portion (9) and said backrest (37) are flat and are, in the loading configuration, substantially coplanar.

8. The seat according to anyone of the preceding claims, **characterized in that** said articulated quadrilateral (43) comprises at least one connecting rod (42) hinged at its ends to said second portion (24) in an eccentric position with respect to said second horizontal axis (26) and to one of said second levers (22a).

9. The seat according to any one of the preceding claims, **characterized in that** said backrest (37) and said seat portion (9) are defined by bodies that are identical to one another and have sides that can be hinged, in the same point, indifferently to said first levers (22) or else to said second levers (22a).

10. The seat according to any one of the preceding claims, **characterized in that** said first coupling means (19) comprise supporting means (28), which are located at a distance from said first levers (22) in said longitudinal direction (8) and define a rest for the rear surface (12) of said seat portion (9) when said seat portion (9) is located in its sitting configuration.

11. The seat according to Claim 10, **characterized in that** said first levers (22) are located in front of said supporting means (28), and **in that**, in said loading configuration, said supporting means (28) are aligned horizontally with said seat portion (9) in said longitudinal direction (8).

## Patentansprüche

1. Konfigurierbarer Sitz (7) für ein Fahrzeug (1), wobei der Sitz aufweist:
- einen Sitzabschnitt (9) und eine Rückenlehne (37), aufweisend:
a) jeweilige weiche Flächen (10, 10a), die eine Auflagefläche für mindestens einen Fahrgast definieren, und
b) jeweilige Rückflächen (12, 12a), die den jeweiligen weichen Flächen (10, 10a) entgegengesetzt sind,
- erste Kuppelmittel (19) und zweite Kuppelmittel (39) zum Kuppeln des Sitzabschnittes (9) bzw. der Rückenlehne (37) an eine Struktur (18) des Fahrzeugs,
wobei die ersten Kuppelmittel (19) erste Schwenkarme (22) aufweisen, so dass der Sitzabschnitt (9) um annähernd 180° relativ zu der Struktur (18) geschwenkt werden kann zwischen:
- einer Sitz-Konfiguration, in der die weiche Fläche (10) des Sitzabschnittes (9) nach oben gerichtet ist, und einer Lade-Konfiguration, in der die Rückfläche (12) des Sitzabschnittes (9) nach oben gerichtet ist und die niedriger als die Höhenlage ist, die von der weichen Fläche (10) des Sitzabschnittes (9) in der Sitz-Konfiguration eingenommen wird,
wobei die ersten Schwenkarme (22) aufweisen:
- einen ersten Abschnitt (23), der mit dem Sitzabschnitt (9) um eine erste horizontale Achse (21) gelenkig verbunden ist, die senkrecht zu der Längsfahrtrichtung (8) des Fahrzeugs ist, und
- einen zweiten Abschnitt (24), der relativ zu der Struktur (18) um eine zweite horizontale Achse (26) geschwenkt werden kann, die parallel zu der ersten horizontalen Achse (21) ist,
wobei während des Schwenkvorgangs zwischen der Lade-Konfiguration und der Sitz-Konfiguration die ersten Schwenkarme (22) um die zweite horizontale Achse (26) zwischen zwei Winkelendpositionen in eine relativ zu der Schwenkrichtung des ersten Sitzabschnittes (9) um die erste horizontale Achse (21) entgegengesetzte Richtung geschwenkt werden,
wobei die zweiten Kuppelmittel (39) zweite Schwenkarme (22a) aufweisen, so dass die Rückenlehne (37) zwischen einer Sitz-Konfiguration und einer Lade-Konfiguration geschwenkt wird, wobei die zweiten Schwenkarme (22a) aufweisen:
- einen dritten Abschnitt (23a), der gelenkig mit der Rückenlehne (37) um eine dritte horizontale Achse (21a) verbunden ist, die parallel zu der ersten horizontalen Achse (21) ist, und
- einen vierten Abschnitt (24a) zum gelenkigen Verbinden der zweiten Schwenkarme an der Struktur (18) um eine vierte horizontale Achse (26a), die parallel zu der ersten horizontalen Achse (21) ist,
wobei die Rückenlehne (37) um die dritte horizontale Achse (21a) von der Sitz-Konfiguration in eine Zwischenposition schwenkbar ist, in der die Rückenlehne (37) mit ihrer Rückfläche (12a) im Wesentlichen horizontal ist, die nach oben gerichtet ist, während die zweiten Schwenkarme (22a) noch um die vierte horizontale Achse (26a) festgelegt sind, wobei die ersten Schwenkarme (22) und die zweiten Schwenkarme (22a) einen Teil eines Gelenkvierecks (43) bilden, das die Schwenkbewegung des Sitzabschnittes (9) um die zweite horizontale Achse (26) abhängig vom Herunterklappen der Rückenlehne (37) von der Zwischenposition in die Lade-Konfiguration ausführt,
**gekennzeichnet durch** das Aufweisen eines Federsystems, das die zweiten Schwenkarme (22a) und die Rückenlehne (37) solange in der Zwischenposition im Gleichgewicht hält, bis ein Nutzer beginnt, die Rückenlehne (37) **durch** manuelles Betätigen ihrer Rückfläche (12a) nach unten zu drücken.

2. Sitz gemäß Anspruch 1, **gekennzeichnet dadurch, dass** das Federsystem Federn aufweist, die sich in Lagen befinden, die mit Stiften übereinstimmen, die zum gelenkigen Verbinden der ersten Schwenkarme (22) und der zweiten Schwenkarme (22a) vorgesehen sind.

3. Sitz gemäß Anspruch 1 oder 2, **dadurch gekennzeichnet, dass** der zweite Abschnitt (24) um die zweite horizontale Achse (26) mit einem Halter (25) gelenkig verbunden ist, der an der Struktur (18) befestigt werden kann, wobei der Halter eine Nase (34) aufweist, die zu einer Seite (15) des Sitzabschnittes (9) hervorsteht und eine Endanschlagfläche für eine Vorderkante (35) der ersten Schwenkarme (22) definiert, so dass die Schwenkbewegung nach vorne um die zweite horizontale Achse gestoppt wird, wenn sich die ersten Schwenkarme (22) in einer Aufricht-Position relativ zu dem Halter (25) befinden.

4. Sitz gemäß einem der vorhergehenden Ansprüche, **gekennzeichnet durch das** Aufweisen von lösbaren Sperrmitteln (30) zum winkeligen Sperren des Sitzabschnittes (9) an den ersten Schwenkarmen (22) um die erste horizontale Achse (21) zumindest in der Sitz-Konfiguration.

5. Sitz gemäß einem der vorhergehenden Ansprüche, **dadurch gekennzeichnet, dass** für jede Rückenlehne (37) und jeden Sitzabschnitt (9) die Rückfläche (12, 12a) durch einen Wandabschnitt (13, 13a) definiert ist, der im Wesentlichen fest ist, und einen Teil einer Endwand (14, 14a) definiert, der einen Kissenkörper (11, 11a) trägt und zwei Seiten (15, 15a) aufweist, die sich an entgegengesetzten Seiten des Kissenkörpers (11, 11a) befinden.

6. Sitz gemäß Anspruch 5, **gekennzeichnet dadurch, dass** die ersten Schwenkarme (22) durch zwei Schwenkarme (22) definiert sind, die sich auf entgegengesetzten Seiten des Sitzabschnittes (9) befinden, und jeder der jeweils ersten Abschnitte (23) gelenkig mit der zugeordneten Seite (15) der Endwand (14) verbunden ist.

7. Sitz gemäß Anspruch 5 oder 6, **gekennzeichnet dadurch, dass** die Abschnitte der Wand (13, 13a) des Sitzabschnittes (9) und der Rückenlehne (37) eben und in der Lade-Konfiguration im Wesentlichen koplanar sind.

8. Sitz gemäß einem der vorhergehenden Ansprüche, **dadurch gekennzeichnet, dass** das Gelenkviereck (43) mindestens eine Verbindungsstange (42) aufweist, die an ihren Enden mit dem zweiten Abschnitt (24) in einer exzentrischen Position relativ zu der zweiten horizontalen Achse (26) und mit einem der zweiten Schwenkarme (22a) gelenkig verbunden ist.

9. Sitz gemäß einem der vorhergehenden Ansprüche, **dadurch gekennzeichnet, dass** die Rückenlehne (37) und der Sitzabschnitt (9) durch Körper definiert sind, die zueinander identisch sind und Seiten haben, die an derselben Stelle gleichermaßen mit den ersten Schwenkarmen (22) oder aber den zweiten Schwenkarmen (22a) gelenkig verbunden werden können.

10. Sitz gemäß einem der vorhergehenden Ansprüche, **dadurch gekennzeichnet, dass** die ersten Kuppelmittel (19) Stützmittel (28) aufweisen, die sich in einem Abstand von den ersten Schwenkarmen (22) in der Längsrichtung (8) befinden und eine Auflage für die Rückfläche (12) des Sitzabschnittes (9) definieren, wenn sich der Sitzabschnitt (9) in seiner Sitz-Konfiguration befindet.

11. Sitz gemäß Anspruch 10, **dadurch gekennzeichnet, dass** sich die ersten Schwenkarme (22) vor den Stützmitteln (28) befinden, und dadurch, dass in der Lade-Konfiguration die Stützmittel (28) horizontal an dem Sitzabschnitt (9) in der Längsrichtung (8) ausgerichtet sind.

## Revendications

1. Siège configurable (7) pour un véhicule (1) ; le siège comprenant :
une partie de siège (9) et un dossier (37) ayant :
a) des surfaces souples (10, 10a) respectives définissant une surface de repos pour au moins un passager ; et
b) des surfaces arrière (12, 12a) respectives opposées aux surfaces souples (10, 10a) correspondantes ;
des premiers (19) et seconds (39) moyens de couplage pour coupler ladite partie de siège (9) et respectivement ledit dossier (37) à une structure (18) du véhicule ;
lesdits premiers moyens de couplage (19) comprenant des premiers leviers (22) afin de faire tourner ladite partie de siège (9) sur approximativement 180° par rapport à ladite structure (18) entre :
une configuration assise dans laquelle la surface souple (10) de ladite partie de siège (9) est orientée vers le haut, et
une configuration de chargement, dans laquelle la surface arrière (12) de ladite partie de siège (9) est orientée vers le haut et est à un niveau inférieur à la hauteur prise par la surface souple (10) de ladite partie de siège (9) dans la configuration assise ;
lesdits premiers leviers (22) comprenant :
une première partie (23) articulée à ladite partie de siège (9) autour d'un premier axe horizontal (21), orthogonal à une direction longitudinale (8) d'avancement dudit véhicule, et
une deuxième partie (24) qui peut tourner par rapport à ladite structure (18) autour d'un deuxième axe horizontal (26) parallèle audit premier axe horizontal (21);
pendant le déplacement entre ladite configuration de chargement et ladite configuration assise, lesdits premiers leviers (22) pouvant tourner autour dudit second axe horizontal (26) entre deux positions angulaires de fin de course dans une direction opposée par rapport à la direction de rotation de ladite partie de siège (9) autour dudit premier axe horizontal (21) ;
lesdits seconds moyens de couplage (39) comprenant des seconds leviers (22a) afin de faire tourner ledit dossier (37) entre une configuration assise et une configuration de chargement ; lesdits seconds leviers (22a) comprenant :
une troisième partie (23a) articulée par rapport audit dossier (37) autour d'un troisième axe horizontal (21a), parallèle audit premier axe horizontal (21), et
une quatrième partie (24a) pour articuler lesdits seconds leviers par rapport à ladite structure (18) autour d'un quatrième axe (26a) parallèle audit premier axe horizontal (21) ;
ledit dossier (37) pouvant tourner autour dudit troisième axe horizontal (21a) de ladite configuration assise à une position intermédiaire dans laquelle ledit dossier (37) est sensiblement horizontal avec sa surface arrière (12a) qui est orientée vers le haut, alors que lesdits seconds leviers (22a) sont encore fixés autour dudit quatrième axe horizontal (26a) ;
lesdits premiers (22) et seconds (22a) leviers faisant partie d'un quadrilatère articulé (43) qui rend la rotation de ladite partie de siège (9) autour dudit deuxième axe horizontal (26) dépendant du renversement dudit dossier (37) de ladite position intermédiaire à ladite configuration de chargement ;
**caractérisé en ce qu'**il comprend un système de ressorts qui maintient lesdits seconds leviers (22a) et ledit dossier (37) en équilibre dans ladite position intermédiaire, jusqu'à ce qu'un utilisateur commence à pousser ledit dossier (37) vers le bas en agissant manuellement sur sa surface arrière (12a).

2. Siège selon la revendication 1, **caractérisé en ce que** ledit système de ressorts comprend des ressorts positionnés dans des positions correspondant à des broches prévues pour articuler lesdits premiers (22) et seconds (22a) leviers.

3. Siège selon la revendication 1 ou 2, **caractérisé en ce que** ladite seconde partie (24) est articulée autour dudit deuxième axe horizontal (26) par rapport à un support (25) qui peut être fixé à ladite structure (18) ; ledit support comprenant une languette (34) qui fait saillie vers un côté (15) de ladite partie de siège (9) et définit une surface de contraste de fin de course pour un bord avant (35) desdits premiers leviers (22) afin d'arrêter la rotation vers l'avant autour dudit deuxième axe horizontal lorsque lesdits premiers leviers (22) sont positionnés dans une position levée par rapport audit support (25).

4. Siège selon l'une quelconque des revendications précédentes, **caractérisé en ce qu'**il comprend des moyens de blocage amovibles (30) pour bloquer de manière angulaire ladite partie de siège (9) sur lesdits premiers leviers (22) autour dudit premier axe horizontal (21) au moins dans ladite configuration assise.

5. Siège selon l'une quelconque des revendications précédentes, **caractérisé en ce que**, pour chacun parmi ledit dossier (37) et la partie de siège (9), la surface arrière (12, 12a) est définie par une partie de paroi (13, 13a) qui est sensiblement rigide et définit une partie d'une paroi d'extrémité (14, 14a), qui supporte un corps de coussin (11, 11a) et comprend deux côtés (15, 15a) positionnés sur les côtés opposés dudit corps de siège (11, 11a).

6. Siège selon la revendication 5, **caractérisé en ce que** lesdits premiers leviers (22) sont définis par deux leviers (22) qui sont positionnés sur les côtés opposés de ladite partie de siège (9) et des premières parties (23) respectives, chacune articulée par rapport à un côté (15) correspondant de la paroi d'extrémité (14).

7. Siège selon la revendication 5 ou 6, **caractérisé en ce que** les parties de paroi (13, 13a) de ladite partie de siège (9) et dudit dossier (37) sont plates et sont, dans la configuration de chargement, sensiblement coplanaires.

8. Siège selon l'une quelconque des revendications précédentes, **caractérisé en ce que** ledit quadrilatère articulé (43) comprend au moins une tige de raccordement (42) articulé au niveau de ses extrémités par rapport à ladite seconde partie (24) dans une position excentrique par rapport audit deuxième axe horizontal (26) et par rapport à l'un desdits seconds leviers (22a).

9. Siège selon l'une quelconque des revendications précédentes, **caractérisé en ce que** ledit dossier (37) et ladite partie de siège (9) sont définis par des corps qui sont identiques entre eux et ont des côtés qui peuvent être articulés, dans le même point, indifféremment par rapport auxdits premiers leviers (22) ou bien auxdits seconds leviers (22a).

10. Siège selon l'une quelconque des revendications précédentes, **caractérisé en ce que** lesdits premiers moyens de couplage (19) comprennent des moyens de support (28), qui sont positionnés à une certaine distance desdits premiers leviers (22) dans ladite direction longitudinale (8) et définissent un repos pour la surface arrière (12) de ladite partie de siège (9) lorsque ladite partie de siège (9) est positionnée dans sa configuration assise.

11. Siège selon la revendication 10, **caractérisé en ce que** lesdits premiers leviers (22) sont positionnés en face desdits moyens de support (28) et **en ce que**, dans ladite configuration de chargement, lesdits moyens de support (28) sont alignés horizontalement avec ladite partie de siège (9) dans ladite direction longitudinale (8).
